# EUROPÄISCHE PATENTSCHRIFT

(11) **EP 1 964 198 B1**
(45) Veröffentlichungstag und Bekanntmachung des Hinweises auf die Patenterteilung: **26.01.2011**
(21) Anmeldenummer: 06829166.5
(22) Anmeldetag: 28.11.2006
(51) Int. Cl.: H01M 8/04, H01M 8/10

(54) **VERFAHREN ZUM BETREIBEN EINER DIREKTOXIDATIONSBRENNSTOFFZELLE UND ENTSPRECHENDE ANORDNUNG**
METHOD FOR OPERATING A DIRECT OXIDATION FUEL CELL AND CORRESPONDING ARRANGEMENT
PROCEDE DE GESTION D'UNE CELLULE A COMBUSTIBLE A OXYDATION DIRECTE ET DISPOSITIF CORRESPONDANT

(30) Priorität: 28.11.2005 DE 102005056672
(43) Veröffentlichungstag der Anmeldung: 03.09.2008
(73) Patentinhaber: Fraunhofer-Gesellschaft zur Förderung der angewandten Forschung e.V., 80686 München (DE); Albert-Ludwigs-Universität Freiburg, 79085 Freiburg (DE)
(72) Erfinder: ECCARIUS, Steffen, 70597 Stuttgart (DE); LITTERST, Christian, 61467 Kronberg im Taunus (DE); KOLTAY, Peter, 79117 Freiburg (DE)
(74) Vertreter: Riepe, Hans-Gerd
(86) Internationale Anmeldenummer: PCT/EP2006/011421
(87) Internationale Veröffentlichungsnummer: WO 2007/060020

(56) Entgegenhaltungen:
- WO-A-2006/082087
- US-A1- 6 096 448
- US-A1- 2005 255 359
- Litterst et al., "Increasing microDMFC efficiency by passive CO2 bubble removal and discontinuous operation", Journal of MIcromechanics and Microengineering, Nr. 16, 11. 8. 2006, S 248-253 XP002424608

## Beschreibung

Die Erfindung betrifft ein Verfahren zum Betreiben einer Direktoxidationsbrennstoffzelle, bei dem die Brennstoffzelle über eine Transportvorrichtung für den Brennstoff, in der Regel mit Methanol, versorgt wird. Ebenso betrifft die Erfindung eine entsprechende Anordnung aus einer Direktoxidationsbrennstoffzelle, einem Brennstoffreservoire und mindestens einer Vorrichtung zum Transport des Brennstoffs durch die Brennstoffzelle.

Der Energiebedarf elektrischer Kleinverbraucher (PDA, Handy, etc.) steigt stetig. Doch während Mikroprozessoren in den vergangenen zehn Jahren rund 30fach schneller geworden sind, hat sich die Energiedichte von Batterien lediglich verdoppelt. Die Brennstoffzelle wird in diesem Zusammenhang als möglicher Ersatz bzw. als Ergänzung für herkömmliche Batterien und Akkumulatoren gesehen. Insbesondere gelten Direktoxidationsbrennstoffzellen (z.B. Direktmethanolbrennstoffzellen) als besonders aussichtsreiche mobile Energiequellen, da der flüssige Brennstoff vergleichsweise leicht handhabbar ist und im Regelfall eine vielfach höhere Energiedichte als Batterien oder Akkus aufweist.

Eine der wesentlichen Herausforderungen für den Betrieb einer Direktoxidationsbrennstoffzelle liegt in der Entstehung von Kohlenstoffdioxid-Blasen bei der Oxidation des kohlenstoffhaltigen, flüssigen Brennstoffs auf der Anodenseite, Als Beispiel sei die Oxidation von Methanol mit Hilfe von Wasser genannt: CH₃OH + H₂O → CO₂ + 6 H* + 6e. Diese Blasen können sich innerhalb der Gasdiffusionsschicht oder in der Fluidverteilungsstruktur festsetzen und so die aktive Zellfläche und die Leistung der Brennstoffzelle verkleinern.

In einer klassischen Betriebsweise wird eine Pumpe, welche die Direktoxidationsbrennstoffzelle mit flüssigem Brennstoff versorgt, kontinuierlich betrieben. Die Gasblasen werden mit dem meist überstöchiometrischem Volumenstrom in Flüssigkeit gelöst bzw. mit der Flüssigkeit aus der Brennstoffzelle herausgespült und in einem nachfolgenden Schritt vom flüssigen Brennstoff getrennt. Dies erfordert einen kontinuierlichen Betrieb der Pumpe, welcher mit größeren Leistungsaufnahmen der Pumpe einhergeht und folglich den Systemwirkungsgrad des gesamten Brennstoffzellesystems verkleinert.

Die Druckschrift US 6 096 448 A beschreibt eine Vorrichtung mit zumindest einer Brennstoffzelle, einem Brennstoffspeichertank, einer Pumpe und einem Zulieferventil. Mit Hilfe eines Controllers wird das Zulieferventil so geschaltet, dass es zu periodischen Verarmungen an Brennstoff an der Anode kommt. Alternativ kann pulsweise auch ein brennstofffreies Fluid zugeführt werden, wodurch die Verarmung an Brennstoff bewirkt wird.

Die Druckschrift US 2005/255359 A1 offenbart ein Brennstoffzellsystem, welches neben einer Brennstoffzelle auch einen Brennstofftank, eine Pumpe sowie ein Regulierungsventil aufweist. Das Regulierungsventil lenkt den Brennstofffluss durch die Membranelektrodeneinheit (MEA), wodurch ein diskontinuierlicher Volumenstrom durch die Brennstoffzelle erreichbar ist.

Ausgehend von dem Stand der Technik der kontinuierlich betrieben Systeme war es Aufgabe der vorliegenden Erfindung, den Betrieb von Direktoxidationsbrennstoffzellen so zu verbessern, dass ein höherer Systemwirkungsgrad der Brennstoffzelle erreicht werden kann. Zusätzlich sollte ein System bereitgestellt werden, durch das das sog. Crossover von Brennstoff, d.h. das Durchtreten von unverbrauchtem Brennstoff durch die Membran, verhindert wird.

Diese Aufgabe wird durch die gattungsgemäße Anordnung mit den kennzeichnenden Merkmalen des Anspruchs 1 und das gattungsgemäße Verfahren mit den kennzeichnenden Merkmalen des Anspruchs 16 gelöst. In Anspruch 22 wird eine Verwendung der erfindungsgemäßen Anordnung genannt. Die weiteren abhängigen Ansprüche zeigen vorteilhafte Weiterbildungen auf.

Erfindungsgemäß wird eine Anordnung aus mindestens einer Direktoxidationsbrennstoffzelle, mindestens einem Brennstoffreservoire und mindestens einer Vorrichtung zum Transport des Brennstoffs durch die Brennstoffzelle bereitgestellt. Die Direktoxidationsbrennstoffzelle enthält dabei eine Membran-Elektröden-Einheit (engl. membrane electrode assembly, MEA) mit einer Anode und einer Kathode sowie mindestens eine anodenseitige und kathodenseitige Fluidverteilungsstruktur mit jeweils mindestens einem Stromkollektor. Über die Fluidverteilungsstruktur können dabei sowohl gasförmige als auch flüssige Edukte an die Membran herangeführt bzw, gasförmige oder flüssige Produkte, die bei der Oxidation gebildet werden, entfernt werden.

Besonderes Merkmal der erfindungsgemäßen Anordnung ist es, dass diese zusätzlich eine Regelungseinheit zur Einstellung des Volumenstroms des Brennstoffs durch die Brennstoffzelle aufweist. Durch Einsatz dieser erfindungsgemäßen Regelungseinheit kann ein diskontinuierlicher Betrieb der Vorrichtung zum Transport des Brennstoffs ermöglicht werden. Mit Hilfe dieser erfindungsgemäßen Anordnung kann ein deutlich höherer Systemwirkungsgrad der Brennstoffzelle erreicht werden.

Diese Leistungszunahme hat unterschiedliche Gründe, die darauf zurückgeführt werden können, dass der Brennstoff nicht kontinuierlich gepumpt wird. Zum einen verringert sich die Methanolkonzentration an der Anoden-Elektrode durch den ständigen Verbrauch des Brennstoffs, der Crossover des Brennstoffs auf die Kathode nimmt ab und die Stromdichte steigt an. Der zweite Grund liegt in der Entstehung von gasförmigen oder dampfförmigen Aggregatzuständen des Brennstoffs in den sich bildenden CO₂-Blasen, welche im kontinuierlichen Betrieb nur in geringem Maße vorkommen. Der gasförmige Brennstoff hat im Vergleich zum flüssigen Aggregatzustand eine bessere Kinetik der Oxidationsreaktion, d.h. eine höhere Effizienz. Da die Elektrode in diesem Fall nicht zwingend mit einer Flüssigkeit in Berührung steht, kann außerdem der Crossover weiter verringert werden. Einen weiteren Beitrag leistet eine Erhöhung der Temperatur, da ein "Auskühlen" durch einen dauerhaften Fluss nicht stattfindet. Dies führt ebenso zu einer besseren Kinetik der Oxidationsreaktion.

Vorzugsweise ist die Regelungseinheit in der erfindungsgemäßen Anordnung ein Druckbehälter mit schaltbarem Ventil, bevorzugt ein bistabiles Ventil.

Als Vorrichtungen zum Transport des Brennstoffs sind insbesondere Pumpen geeignet. Hierbei sind besonders Pumpen bevorzugt, die im Ruhezustand flüssigkeitsdurchlässig sind, sodass im Ruhezustand selbst bei weiterem Verbrauch des Brennstoffs eine Verarmung an Brennstoff in der Brennstoffzelle verhindert wird. Ein Beispiel für eine derartige Pumpe ist eine Pumpe, die Diffusorelemente anstelle von Rückschlagventilen aufweist (sog. Nozzle-Diffusor-Pump).

Die Membran-Elektroden-Einheit weist den aus dem Stand der Technik bekannten Aufbau auf. So umfasst diese eine protonenleitende Membran, z.B. aus Nafion, sowie jeweils anodenseitige und kathodenseitige Katalysator- und Diffusionsschichten. Die protonenleitende Membran sollte dabei undurchlässig für den Brennstoff und die Reaktionsprodukte sein.

Hinsichtlich der Katalysatorschichten sind solche Materialien zu bevorzugen, die eine große aktive Oberfläche, eine Resistenz gegen Kohlenmonoxid und möglichst keine Nebenreaktionen oder Nebenprodukte aufweisen. Besonders bevorzugt enthalten Katalysatorschichten dabei Platin, Ruthenium und/oder deren Legierungen.

Die Diffusionsschichten sollen den Transport des Brennstoffs zur anodischen Katalysatorschicht und des weiteren Edukts zur kathodischen Katalysatorschicht ermöglichen. Zusätzlich muss die Diffusionsschicht den Transport der gasförmigen Reaktionsprodukte von der anodischen Katalysatorschicht bzw. der Reaktionsprodukte von der kathodischen Katalysatorschicht ermöglichen. Ein weiteres Erfordernis an die Diffusionsschicht betrifft deren Eigenschaft zur Elektronenleitung.

Anstelle der Diffusionsschichten können auch Mikrostrukturen eingesetzt werden.

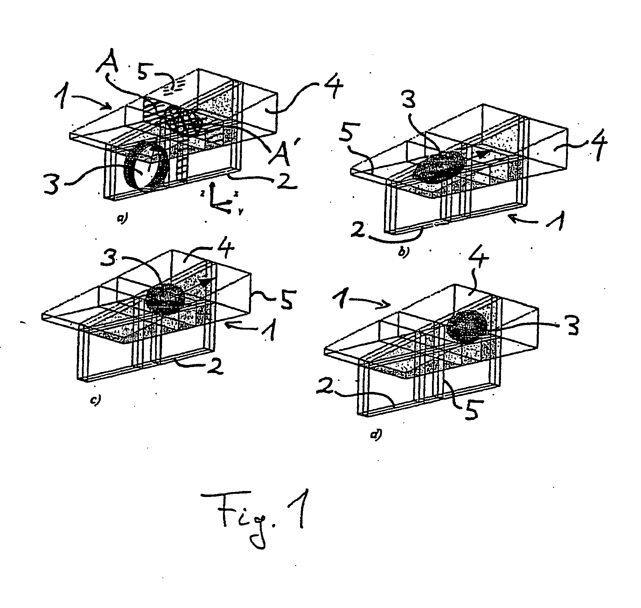

Die erfindungsgemäße Anordnung sieht vor, dass die Brennstoffzelle zusätzlich eine Vorrichtung zum Entgasen des flüssigen Brennstoffs aufweist. Als Entgasungsvorrichtung ist eine Mikrostrukturierung der Fluidverteilungsstruktur vorgesehen, durch die der Abtransport von gasförmigen Medien aus der Fluidverteilungsstruktur begünstigt wird. Bezüglich der Mikrostrukturierung wird auf die Figuren 1 bis 4 verwiesen.

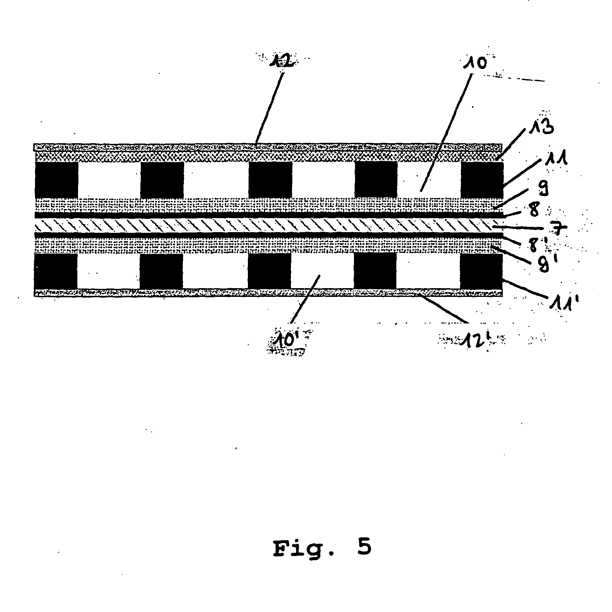

Eine zusätzliche Variante für die Entgasung sieht vor, dass die Brennstoffzelle anodenseitig mindestens eine für Gase und für Flüssigkeiten undurchlässige Sperrschicht aufweist. Hierdurch können die Flüssigkeiten in der Fluidverteilungsstruktur gehalten und die Gase aus der Fluidverteilungsstruktur abtransportiert werden. Bezüglich dieser Variante wird auf Fig. 5 verwiesen. Die Sperrschicht ist dabei bevorzugt eine oleophobierte Membran. Ebenso können aber auch Mikrostrukturen oder Keramiken als Sperrschicht verwendet werden. Hinsichtlich der Anordnung der Sperrschicht sieht eine erste bevorzugte Variante vor, dass diese zwischen der anodenseitigen Endplatte, die sich auf der der MEA abgewandten Seite der Fluidverteilungsstruktur befindet und der anodenseitigen Fluidverteilungsstruktur angeordnet ist. Eine andere bevorzugte Variante sieht vor, dass die Sperrschicht auf der der anodenseitigen Fluidverteilungsstruktur abgewandten Seite der anodenseitigen Endplatte angeordnet ist. Vorzugsweise weist die Endplatte Entgasungslöcher auf.

Erfingdungsgemäß wird ebenso ein Verfahren zum Betreiben einer Direktoxidationsbrennstoffzelle bereitgestellt, bei dem die Brennstoffzelle über eine Transportvorrichtung mit dem Brennstoff versorgt wird. Besonderes Merkmal des erfindungsgemäßen Verfahrens ist es, dass der Volumenstrom des Brennstoffs durch die Brennstoffzelle geregelt wird, wodurch ein diskontinuierlicher Volumenstrom ermöglicht wird. Dieser diskontinuierliche Volumenstrom bringt die zuvor beschriebenen Vorteile mit sich.

Eine bevorzugte Variante sieht vor, dass der Volumenstrom in Intervallen erfolgt. Dies bedeutet, dass der Transport des Brennstoffs durch die Brennstoffzelle in einer ersten Phase A erfolgt, während in einer weiteren Phase B der Transport unterbrochen wird, wobei die Phasen A und B alternieren. Hinsichtlich der Intervalllängen gibt es keine zwingenden Vorgaben, da die Intervalllängen in Abhängigkeit von der Geometrie der Fluidverteilungsstrukturen, dem Arbeitspunkt der Brennstoffzelle und der Verdünnung des Brennstoffs eingestellt werden.

Vorzugsweise wird das erfindungsgemäße Verfahren mit der zuvor beschriebenen erfindungsgemäßen Anordnung durchgeführt. Es ist aber auch möglich, das Verfahren mit Vorrichtungen mit beliebiger Anordnung der einzelnen Komponenten durchzuführen.

Anhand der nachfolgenden Figuren soll der erfindungsgemäße Gegenstand näher erläutert werden, ohne diesen auf die hier gezeigten speziellen Ausführungsformen einschränken zu wollen. Es zeigt:
- Fig. 1: eine perspektivische Ansicht eines Kanälab- schnitts aus einer Vorrichtung zum Entfer- nen von gasförmigen Bestandteilen in Form einer Mikrostruktur mit einem Einschluss zu vier aufeinander folgenden Zeitpunkten,
- Fig. 2: einen Querschnitt durch einen Kanal in ei- ner anderen Ausführung der Mikrostruktur mit Einschlüssen zu sechs aufeinander fol- genden Zeitpunkten sowie eine Seitenansicht desselben Kanals mit einem Einschluss zu zwei aufeinander folgenden Zeitpunkten,
- Fig. 3: jeweils einen Längsschnitt durch einen Ka- nal aus zwei anderen Ausführungsbeispielen der Mikrostruktur und
- Fig. 4: wiederum jeweils einen Längsschnitt durch zwei Kanäle weiterer Ausführungsbeispiele.
- Fig. 5: schematisch den Aufbau einer erfindungsge mäßen Anordnung.
- Fig. 6: anhand eines Diagramms den Spannungsverlauf in Abhängigkeit von der Zeit bei diskonti nuierlichem Volumenstrom.
- Fig. 7: anhand eines Diagramms den Vergleich der Stromdichten bei kontinuierlichem Volumen strom, diskontinuierlichem Volumenstrom und diskontinuierlichem Volumenstrom unter stützt durch hydrostatischen Druck im Reservoire mit einer Mikrostruktur.

In Fig. 1 ist viermal der gleiche Kanal 1 abgebildet, der in einen selbst nicht abgebildeten chemischen Mikroreaktor integriert ist und dort mit einer in der Figur jeweils unten liegenden Seitenfläche 2 an einer katalytischen Membran anliegend angeordnet ist. Der Kanal 1 führt ein strömbares Medium, bei dem es sich im vorliegenden Fall um eine Flüssigkeit handelt. Ein bestimmungsgemäßer Betrieb des chemischen Mikroreaktors ist mit einer Bildung von Gas an der katalytischen Membran verbunden, das an der Seitenfläche 2 in den Kanal 1 eintritt und dort Blasen bildet. Ein durch eine solche Blase gebildeter Einschluss 3 ist in der Fig. 1 in den mit a), b), c) und d) gekennzeichneten Abbildungen zu vier aufeinander folgenden Zeitpunkten dargestellt, wobei Abbildung b) einen 0,000755 s, die Abbildung c) einen 0,001175 s und die Abbildung d) einen 0,00301 s nach dem in Abbildung a) gezeigten Zeitpunkt wiedergibt.

Bei anderen, ähnlich ausgeführten Vorrichtungen könnten die Einschlüsse 3 auch durch ein Fluid gebildet sein, das von dem durch den Kanal 1 geführten Medium unterscheidbar ist. Auch wäre es möglich, dass jenes strömbare Medium nicht als Flüssigkeit, sondern als Gas vorläge. Im hier beschriebenen Fall handelt es sich bei dem strömbaren Medium um einen flüssigen Reaktanden, der dem Kanal 1 von einem in Fig. 1 jeweils links liegenden Ende zugeführt wird. An einem in Fig. 1 jeweils rechts liegend abgebildeten Ende des Kanals 1 weist dieser einen offen endenden Kanalausgang 4 auf, durch den das den Einschluss 3 bildende Gas in eine Umgebung des Mikroreaktors entweichen kann.

Der Kanal 1 hat einen Querschnitt, der ein T-Profil bildet, wobei die Seitenfläche 2 einen von einem Querbalken des T-Profils abstehenden weiteren Balken abschließt. Aufgrund von Kapillarkräften, die eine Minimierung einer Oberflächenenergie des Einschlusses 3 bewirken, steigt der an der Seitenfläche 2 gebildete Einschluss 3 zunächst auf bis zu einer Stelle, an der der genannte weitere Balken den Querbalken berührt, wodurch der Einschluss 3 von der an der Seitenfläche 2 anliegenden katalytischen Membran entfernt wird.

Zusätzlich weist nun der Kanal 1 eine Geometrie auf, die den Einschluss 3 in eine Form zwingt, in der wiederum Kapillarkräfte auf ihn wirken, die den Einschluss 3 längs des Kanals 1 zum Kanalausgang 4 hin bewegen. Diese Geometrie ist dadurch charakterisiert, dass ein Verhältnis A'/1' und ein Verhältnis A/1 längs des Kanals 1 zum Kanalausgang 4 hin streng monoton und stetig zunehmen, wobei für jeden auf einer Längsrichtung des Kanals 1 senkrecht stehenden Querschnitt des Kanals 1 die Größe A als Flächeninhalt und die Größe 1 als Umfangslänge dieses Querschnitts definiert seien, während mit A' ein Flächeninhalt und mit 1' eine Länge einer Umfangslinie einer innerhalb dieses Querschnitts liegenden zusammenhängenden Fläche bezeichnet sei, wobei diese Fläche dadurch definiert ist, dass A'/1' verglichen mit allen anderen in dem Querschnitt liegenden zusammenhängenden Flächen einen maximalen Wert annimmt, wobei θ definiert ist als Randwinkel, der auf Höhe des jeweiligen Querschnitts an der Kanalwand 5 zwischen dem vom Kanal 1 geführten strömbaren Medium und dem die Einschlüsse 3 bildenden Gas (oder bei anderen Ausführungen der Erfindung flüssigen Fluid) einstellt und vollständig in dem erstgenannten strömbaren Medium liegt. Im vorliegenden Beispiel gilt θ<π/2, so dass insbesondere sign(cosθ) = +1 gilt und damit auch die Größen sign(cosθ)A'/1' und sign(cosθ)A/1 längs des Kanals 1 zum offen endenden Kanalausgang 4 hin streng monoton und stetig zunehmen.

Die monotone Zunahme der genannten Größen bzw. Verhältnisse längs des Kanals 1 zum Kanalausgang 4 hin ist im vorliegenden Fall dadurch realisiert, dass der Flächeninhalt A des Querschnitts des Kanals 1 und damit auch der Flächeninhalt A' der genannten innerhalb des Querschnitts liegenden Fläche, die in guter Näherung der Fläche entspricht, die ein Einschluss 3 innerhalb des Querschnitts einzunehmen bestrebt ist, längs des Kanals monoton zunimmt. Erreicht wird eine Zunahme jener Flächen A und A' längs des Kanals 1 dabei dadurch, dass eine Abmessung des Querschnitts in einer zum Querbalken des erwähnten T-Profils senkrecht stehenden Richtung längs des Kanals 1 monoton zunehmend gestaltet ist, was durch eine im Verlauf des Kanals 1 zunehmende Streckung eines den Querbalken bildenden Teils des T-Profils in zum Querbalken senkrechter Richtung und eine damit verbundene Profiländerung realisiert wird. Der jeweils den Querbalken des T-Profils bildende Teil des Kanals 1 erhält dadurch eine Keilform. Es wären auch andere Geometrien des Kanals 1 denkbar, bei denen ein größter Durchmesser des Querschnitts des Kanals 1 und/oder eine Abmessung dieses Querschnitts in einer auf jenem Durchmesser senkrecht stehenden Richtung längs des Kanals 1 monoton zunimmt, um dadurch eine Bewegung von Einschlüssen 3 in eine Vorzugsrichtung durch Kapillarkräfte zu induzieren. Im vorliegenden Fall des Kanals 1 aus der Fig. 1 ergibt sich in beschriebener Weise eine Profiländerung, bei der auch ein als A/l² und ein als A'/1'² definiertes Verhältnis längs des Kanals 1 zum Kanalausgang 4 hin stetig und streng monoton zunimmt.

Schließlich wäre es auch möglich, die Kanalwand 5 des Kanals 1 alternativ oder zusätzlich zu einer Profiländerung mit sich längs des Kanals ändernden Oberflächeneigenschaften auszuführen, beispielsweise durch eine ortsabhängige Beschichtung, so dass der Randwinkel θ, der eine Funktion des die Einschlüsse 3 bildenden Gases, des vom Kanal 1 geführten strömbaren Mediums und der Oberflächeneigenschaften der Kanalwand 5 ist, einen sich längs des Kanals 1 ändernden Wert hat und dass die Einschlüsse 3 dadurch in eine Form gebracht werden, welche die die Einschlüsse 3 zum Kanalausgang 4 hin bewegenden Kapillarkräfte verursacht oder verstärkt.

Der in der Fig. 1 nicht maßstabsgetreu abgebildete Kanal ist ferner so dimensioniert, dass der Flächeninhalt A des Querschnitts des Kanals 1 an einem Kanalbeginn einen Wert von 25 000 µm² hat und über eine Strecke einer Länge von 0,7 mm längs des Kanals 1 gleichmäßig bis zu einem Wert von 95 000 µm² am Kanalausgang 4 zunimmt. Dabei hat der Kanal 1 eine durch eine Länge des Querbalkens des erwähnten T-Profils gegebene und im vorliegenden Fall konstante Breite von 500 µm. Möglich wäre auch eine entsprechende Gestaltung einer Kapillare, bei der eine Querschnittsänderung lediglich durch eine Verkippung mindestens einer der Kanalwände 5 um nur etwa 0,001° realisiert wird.

Bei einem Betrieb des Mikroreaktors, der den abgebildeten Kanal 1 enthält, entstehen die Einschlüsse 3, von denen in der Fig. 1 einer abgebildet ist, an der Seitenfläche 2, wobei das die Einschlüsse 3 bildende Gas eine aufgrund der vorrichtungsbedingt an der Seitenfläche 2 bzw. an der dort anliegenden katalytischen Membran stattfindenden Reaktion eindeutig festgelegte chemische Zusammensetzung hat. Damit ist auch der zuvor zur Beschreibung von Eigenschaften des Kanals 1 herangezogene Randwinkel θ festgelegt. Aufgrund der beschriebenen Geometrie des Kanals 1 werden die Einschlüsse 3 nun ausschließlich durch Kapillarkräfte angetrieben zu dem Kanalausgang 4 hin bewegt. Außer in chemischen Mikroreaktoren können strömbare Medien führende Kapillare der Art des zuvor beschriebenen Kanals 1 auch in anderen Vorrichtungen insbesondere zum Zweck einer Entgasung oder einer Entfernung anderer Einschlüsse vorgesehen werden, beispielsweise in Vorrichtungen, die nachfüllbare Flüssigkeiten enthalten und bei denen ein Nachfüllen typischerweise mit einer Blasenbildung verbunden ist. Als Beispiel seien nachfüllbare Tintenpatronen genannt.

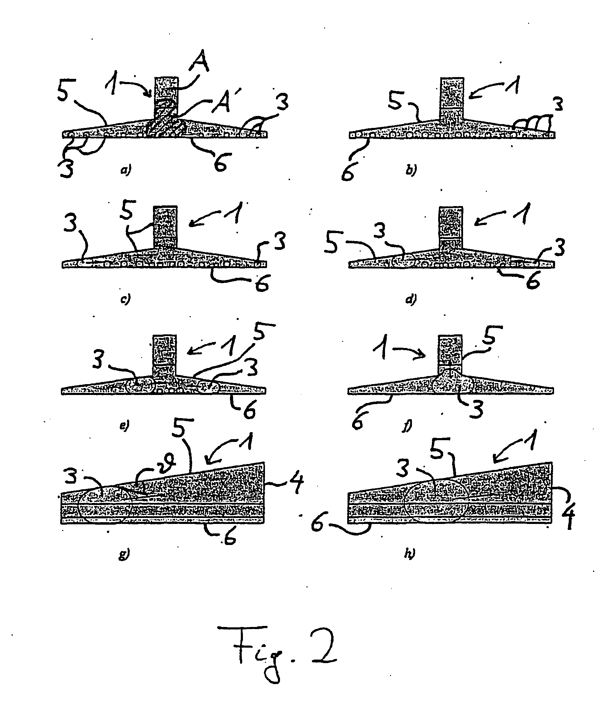

Ein ähnlicher Kanal 1, der zum Transport eines flüssigen Reaktanden in einer Bipolarplatte eines Brennstoffzellenstapels dient und ähnliche Abmessungen wie der zuvor beschriebene Kanal 1 hat, ist in der Fig. 2 als Querschnitt (Abbildungen a) bis f)) und als Seitenansicht (Abbildungen g) und g)) dargestellt. Der selbst nicht abgebildete Brennstoffzellenstapel besteht im vorliegenden Fall aus Direkt-Methanol-Brennstoffzellen, wobei der abgebildete Kanal 1 primär zum Transport von den genannten Reaktanden bildendem Methanol dient.

Der Kanal 1 hat wieder einen ein T-Pofil bildenden Querschnitt, wobei ein in der Fig. 2 jeweils unten liegender Querbalken dieses T-Profils an einer als Katalysator dienenden und ihrerseits an einer Elektrolytmembran anliegenden Diffusionslage anliegt. Diese Diffusionslage bildet eine aktive Fläche 6, an der bei einem Betrieb des Brennstoffzellenstapels gasförmiges Kohlendioxid entsteht, welches von dem Methanol umgebene Einschlüsse 3 innerhalb des Kanals 1 bildet. Der Querbalken des T-Profils hat eine sich zu zwei Enden hin verjüngende Form, wobei mittig an dem Querbalken ein von der aktiven Fläche 6 weg weisender weiterer Balken absteht. Die mit a) bis f) gekennzeichneten Abbildungen in der Fig. 2 veranschaulichen, dass diese Form des T-Profils zur Folge hat, dass sich die wachsenden Einschlüsse 3 aufgrund von Kapillarkräften zu dem genannten weiteren Balken hinbewegen, wobei größere Einschlüsse 3 unterwegs angetroffene kleinere Einschlüsse 3 in sich aufnehmen. Bei anderen Ausführungen der Erfindung kann vorgesehen sein, dass sich der erwähnte weitere Balken, der mittig am Querbalken des T-Profils ansetzt, vom Querbalken weg verbreitert, wodurch sich eine Bewegung der Einschlüsse 3 aufgrund von Kapillarkräften in den weiteren Balken des T-Profils hinein und damit von der aktiven Fläche 6 weg induzieren lässt. In ähnlicher Weise könnte der Kanal 1 in einer Abwandlung der Erfindung auch mit einem L-Profil ausgeführt sein (das sich durch Weglassen einer Hälfte des Querbalkens ergäbe) mit einem an der aktiven Fläche 6 anliegenden Schenkel.

Wie bei dem zuvor beschriebenen Beispiel hat auch der in der Fig. 2 abgebildete Kanal 1 einen längs des Kanals 1 zu einem Kanalausgang 4 stetig und streng monoton zunehmenden Querschnitt A, wobei auch ein als A/l definiertes Verhältnis zum Kanalausgang 4 hin stetig und streng monoton zunimmt, wobei 1 als Umfangslänge des Querschnitts des Kanals 1 definiert ist. Die Einschlüsse 3 bilden mit einer Kanalwand 5 einen Randwinkel oder Kontaktwinkel θ mit einem kleinen Wert von zwischen 0 und π/2, weshalb die erwähnte Zunahme des Verhältnisses A/l und die damit verbundene Zunahme des Verhältnisses A'/l' (A' und l' seien wie zuvor im Zusammenhang mit Fig. 1 erläutert definiert) zur Folge hat, dass auf die Einschlüsse 3 diese zum Kanalausgang 4 hin bewegende Kapillarkräfte wirken. Die Zunahme des Querschnitts A und einer in beschriebener induzierte Bewegung eines Einschlusses 3 zum Kanalausgang 4 hin ist in den Abbildungen g) und h), die zwei aufeinander folgende Zeitpunkte wiedergeben, veranschaulicht. Dort ist auch an einer Stelle der Randwinkel θ eingezeichnet.

Ähnlich wie der hier beschriebene Kanal 1 kann auch ein Kühlmittelkanal ausgeführt sein, der ein flüssiges Kühlmittel führt und in dem sich bei einem Betrieb des Brennstoffzellenstapels oder eines anderen chemischen Mikroreaktors Dampfblasen des Kühlmittels bilden können. Auch können entsprechende Kanäle 1 nicht nur in Bipolarplatten, sondern auch in anderen Stromabnehmern beispielsweise von Brennstoffzellen angeordnet sein.

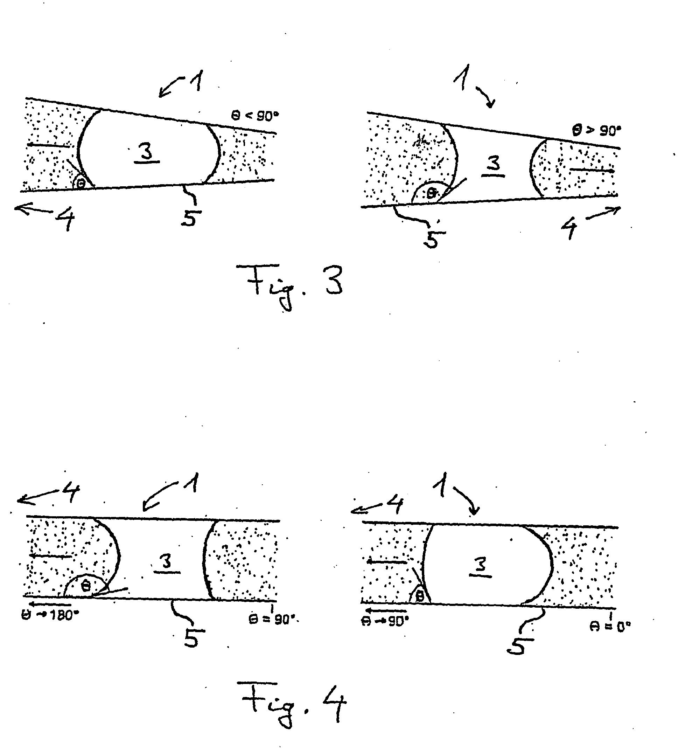

Die Figuren 3 und 4, in denen wiederkehrende Merkmale wieder mit den gleichen Bezugszeichen gekennzeichnet sind, veranschaulichen noch einmal die beschriebenen Effekte eines auf Kapillarkräfte zurückzuführenden Blasentransports. In Fig. 3 links ist ein Kanal 1 mit einem Einschluss 3 eines Fluids, der rechts und links von einem strömbaren Medium eingeschlossen ist, gezeigt. Der Kontaktwinkel θ, der als vollständig im strömbaren Medium außerhalb des Einschlusses 3 liegend definiert ist, ist hier kleiner als π/2, so dass eine Zunahme von A/l (und A'/l') zum Kanalausgang 4 (hier nach links) hin einen Blasentransport in diese Richtung bewirkt. In derselben Figur 3 ist rechts ein anderer Kanal 1 aus einer anderen Vorrichtung abgebildet, in dem sich in ähnlicher Weise Einschlüsse 3 bilden, bei denen sich aber ein Kontaktwinkel θ einstellt, der größer als n/2 ist. Hier bewirkt eine Abnahme von A/l (und A'/l') zum Kanalausgang 4 (jetzt rechts liegend) hin, dass die Einschlüsse 3 dorthin bewegt werden.

Fig. 4 veranschaulicht an zwei Beispielen, links für θ > π/2 und rechts für θ < π/2, wie ein entsprechender Effekt auch bei gleichbleibendem Kanalquerschnitt durch ortsabhängige Werte von θ erreicht wird. In beiden Fällen bewirkt eine Zunahme von θ zum Kanalausgang 4 (jeweils links liegend) hin eine auf den jeweiligen Einschluss 3 wirkende Kraft, der diesen zum Kanalausgang 4 hin bewegt. In allen geschilderten Fällen kommt die Bewegung durch unterschiedliche Kapillardrücke an den zwei gegenüberliegenden Enden des jeweiligen Einschlusses 3 zustande, was sich in unterschiedlichen Krümmungen der die Einschlüsse begrenzenden Menisken widerspiegelt. Verursacht ist dieser Effekt bei den Beispielen aus Fig. 3 durch die Kanalgeometrie, bei den Beispielen aus Fig. 4 durch einen ortsabhängigen Kontaktwinkel θ, der durch eine sich längs des Kanals 1 ändernde Oberflächenbeschichtung der Kanalwand 5 realisiert sein kann. Selbstverständlich können die anhand der Figuren 3 und 4 beschriebenen Effekte auch (durch Kombination der Merkmale) überlagert werden.

Mit der vorliegenden Mikrostruktur wird nachalledem insbesondere vorgeschlagen, geometrische Strukturen für den Transport von Gasblasen zu nutzen, indem die Geometrie fluidführender Kanäle 1 den jeweiligen Anforderungen entsprechend gestaltet wird. Wird beispielsweise eine Seitenwand 2 des Kanals 1 durch ein Membran gebildet, an der eine Reaktion abläuft, die beispielsweise Gas produziert, welches schnellstmöglich abgeführt werden soll, so kann die Kanalgeometrie dahingehend gestaltet werden, dass das Gas allein aufgrund von Kapillarkräften von der Membran abtransportiert wird. Strukturen der hier vorgestellten Art können also zum passiven Abtransport von Gasvolumina genutzt werden, wobei die Kanäle 1 eine Vorzugsrichtung vorgeben und zum passiven Transport auch über längere Strecken genutzt werden können. Zu einem Austrag der Gasblasen sind dabei keine von außen wirkenden Kräfte und damit auch keine entsprechenden externen Komponenten wie beispielsweise Pumpen erförderlich. Die Fign. 1 und 2 basieren auf numerischen Strömungssimulationen und zeigen, wie sich Gasvolumina, welche die Einschlüsse 3 bilden, aufgrund einer Minimierung von Oberflächenenergien jeweils in einen bestimmten Ausschnitt eines Querschnitts hineinbewegen und dort aufgrund unterschiedlicher Kapillardrücke in eine Bewegung entlang des Kanals 1 gezwungen werden. Diese Bewegung dauert typischerweise bis zu einem Ablösen des entsprechenden Gasvolumens von den Kanalwänden 5 an einem Kanalausgang 4 an, da dann ein energetisches Minimum erreicht wird.

Es wird also insbesondere vorgeschlagen, passive Systeme der hier beschriebenen Art zum Transport einer Einschlüsse 3 bildenden Phase (typischerweise Gas) in chemischen Reaktorsystemen einzusetzen. Typische Reaktoren, die für einen Einsatz solcher Strukturen geeignet sind, sind katalytische Reaktoren wie beispielsweise Brennstoffzellen mit katalytischen Membranen, an denen kontinuierlich Gasblasen entstehen. Durch einen zügigen Abtransport der Gasblasen wird damit ein Blockieren einer aktiven Membranfläche verhindert, indem diese Membranfläche leer geräumt wird. Die entstehenden Gasblasen sorgen dazu mit Hilfe der speziellen angepassten Geometrie der Kanäle 1 selbständig für eine typischerweise periodische Reinigung der Membranfläche von Gasblasen. Diese Methode gewährleistet eine maximale freie Reaktionsfläche, stellt eine selbsttätige Wiederbefüllung des Reaktors mit den entsprechenden Reaktanden sicher und bietet somit große Vorteile gegenüber dem Stand der Technik. Die geometrischen Strukturen, durch die die erwünschten Kapillarkräfte zum passiven Transport der Blasen bildenden Phase hervorgerufen werden, können auch Stege und Verengungen umfassen oder durch solche realisiert sein. Die Geometrie soll dabei so beschaffen sein, dass die Blasen bildende Phase sich aufgrund der Geometrie und aufgrund von Oberflächenbeschaffenheiten der geometrischen Strukturen - angetrieben durch eine Oberflächenspannung der entstehenden Blasen - in eine Vorzugsrichtung bewegt, wobei ein Transport der Blasen typischerweise ausschließlich passiv, d.h. lediglich angetrieben durch die Kapillarkräfte an Phasengrenzen erfolgt.

In Fig. 5 wird schematisch der Aufbau einer erfindungsgemäßen Variante der beanspruchten Anordnung dargestellt. Diese basiert auf einer Membran-Elektroden-Einheit (MEA) mit einer Protonen-leitenden Membran 7, an die sich anodenseitig und kathodenseitig Katalysatorschichten 8 und 8' sowie Gasdiffusionsschichten 9 und 9' anschließen. Auf der Anodenseite ist im Anschluss eine Fluidverteilungsstruktur 10 mit dazugehörigen Stromkollektoren 11 angeordnet. In gleicher Weise weist die Kathodenseite eine Fluidverteilungsstruktur 10' mit Stromkollektoren 11' auf. Den Abschluss auf beiden Seiten bilden jeweilige Endplatten 12 und 12', wobei auf der Anodenseite zusätzlich eine gasdurchlässige aber flüssigkeitsundurchlässige Sperrschicht, z.B. eine oleophobierte Membran, angeordnet ist. Mit Hilfe dieser Sperrschicht 13 wird der Brennstoff in der Fluidverteilungsstruktur gehalten, während das im Falle der Oxidation von Methanol entstehende Kohlenstoffdioxid in die Umgebung entweichen kann. Die Anordnung der Sperrschicht ist nicht zwingend, da diese auch von außen auf der Endplatte 12 aufgebracht sein kann.

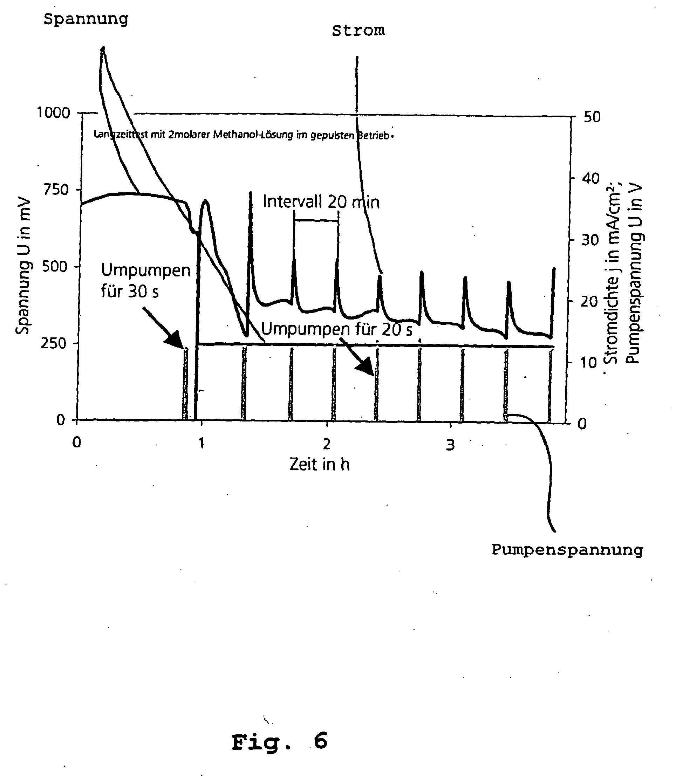

Anhand von Fig. 6 wird der Spannungsverlauf beim gepulsten Transport des Brennstoffs dargestellt. Im vorliegenden Fall reicht ein Umpumpen für 20 sek aus, um die Brennstoffzelle für 20 min zu betreiben.

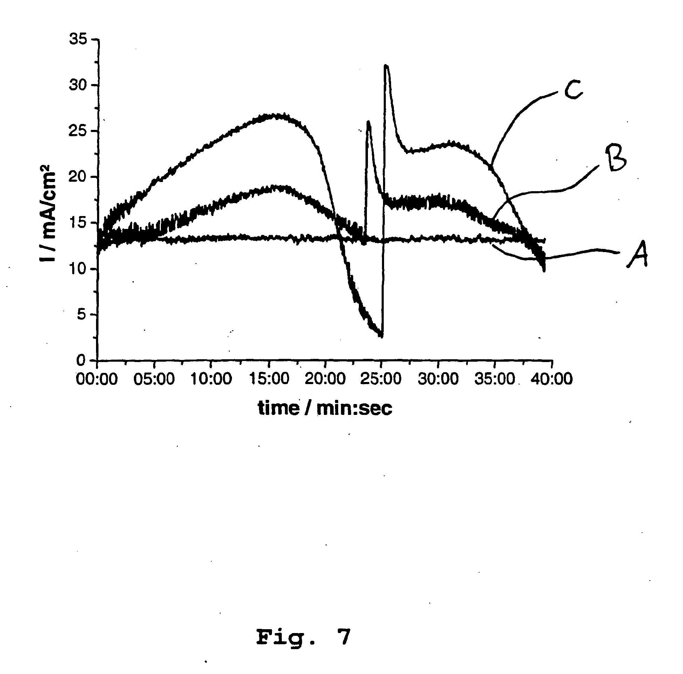

In Fig. 7 werden drei verschiedene Verfahrensweisen miteinander verglichen, das aus dem Stand der Technik bekannte kontinuierliche Pumpen (A), das diskontinuierliche Pumpen (B) mit geschlossenem Ventil zwischen Reservoire und Brennstoffzelle und das diskontinuierliche Pumpen (C) unterstützt durch hydrostatischen Druck im Reservoire. Bei allen drei Varianten erfolgte eine Entgasung mit der zuvor beschriebenen Mikrostrukturierung, wie sie auch in den Figuren 1 bis 4 dargestellt ist. Große Flussraten des Brennstoffs können sich wegen des höheren Drucks und konstanter, hoher Brennstoffkonzentration negativ auf die Leistung der Brennstoffzelle auswirken, da hierdurch der sog. Crossover von Brennstoff begünstigt wird. Im Umkehrschluss begünstigen geringe Flussraten den Gesamtwirkungsgrad des Brennstoffzellensystems. Wie in Fig. 7 zu erkennen ist, kann der Strom und somit auch die Leistung einer Brennstoffzelle durch das kontinuierliche Pumpen (B in Fig. 7) gesteigert werden. In diesem Fall wird die Pumpe gestoppt und nach ca. 23 min kurzzeitig eingeschaltet. Eine weitere Steigerung kann erzielt werden, indem eine im Ruhezustand flüssigkeitsdurchlässige Pumpe eingesetzt wird (C in Fig. 7).

## Patentansprüche

1. Anordnung aus mindestens einer Direktoxidationsbrennstoffzelle enthaltend eine Membran-Elektroden-Einheit mit Anode und Kathode sowie mindestens einer anodenseitigen und kathodenseitigen Fluidverteilungsstruktur mit jeweils mindestens einem Stromkollektor sowie mindestens einem Brennstoffreservoir und mindestens einer Vorrichtung zum Transport des Brennstoffs durch die Brennstoffzelle,
wobei die Anordnung zusätzlich eine Regelungseinheit zur Einstellung des Volumenstroms des Brennstoffs durch die Brennstoffzelle aufweist, wodurch ein diskontinuierlicher Betrieb der Vorrichtung zum Transport des Brennstoffs ermöglicht wird,
**dadurch gekennzeichnet,**
**dass** die Brennstoffzelle zusätzlich eine Entgasungsvorrichtung zum Entfernen von gasförmigen Bestandteilen des flüssigen Brennstoffs aufweist, wobei die Entgasungsvorrichtung in Form einer Mikrostrukturierung der Fluidverteilungsstruktur vorliegt, die den Abtransport von gasförmigen Medien aus der Fluidverteilungsstruktur begünstigt.

2. Anordnung nach Anspruch 1,
**dadurch gekennzeichnet, dass** die Regelungseinheit ein Druckbehälter mit schaltbarem Ventil, insbesondere ein bistabiles Ventil, ist.

3. Anordnung nach einem der vorhergehenden Ansprüche,
**dadurch gekennzeichnet, dass** die Vorrichtung zum Transport des Brennstoffs im Ruhezustand einen Transport des Brennstoffs vom Reservoir zu der Brennstoffzelle erlaubt.

4. Anordnung nach einem der vorhergehenden Ansprüche,
**dadurch gekennzeichnet, dass** die Vorrichtung zum Transport des Brennstoffs eine Pumpe, insbesondere eine Mikropumpe ist.

5. Anordnung nach dem vorhergehenden Anspruch,
**dadurch gekennzeichnet, dass** die Pumpe eine Pumpe mit Diffusorelementen ist.

6. Anordnung nach einem der vorhergehenden Ansprüche,
**dadurch gekennzeichnet, dass** die Membran-Elektroden-Einheit aus einer protonenleitenden Membran sowie jeweils anodenseitigen und kathodenseitigen Katalysatorschichten und Diffusionsschichten besteht,

7. Anordnung nach einem der Ansprüche 1, bis 5,
**dadurch gekennzeichnet, dass** die Membran-Elektroden-Einheit aus einer protonenleitenden Membran sowie jeweils anodenseitigen und kathodenseitigen Katalysatorschichten und Mikrostrukturen besteht.

8. Anordnung nach dem vorhergehenden Anspruch,
**dadurch gekennzeichnet, dass** die protonenleitende Membran undurchlässig für den Brennstoff und die Reaktionsprodukte ist.

9. Anordnung nach einem der beiden vorhergehenden Ansprüche,
**dadurch gekennzeichnet, dass** die Katalysatorschichten Platin, Ruthenium und/oder deren Legierungen enthalten.

10. Anordnung nach einem der vorhergehenden Ansprüche,
**dadurch gekennzeichnet, dass** die Fluidverteilungsstruktur mindestens einen Kanal mit einem T-förmigen Querschnitt aufweist.

11. Anordnung nach einem der vorhergehenden Ansprüche,
**dadurch gekennzeichnet, dass** die Brennstoffzelle anodenseitig mindestens eine für Gase durchlässige und für Flüssigkeiten undurchlässige Sperrschicht aufweist, wodurch die Flüssigkeiten in der Fluidverteilungsstruktur gehalten und die Gase aus der Fluidverteilungsstruktur abtransportierbar sind.

12. Anordnung nach dem vorhergehenden Anspruch,
**dadurch gekennzeichnet, dass** die mindestens eine Sperrschicht aus einer oleophobierten Membran besteht.

13. Anordnung nach einem der beiden vorhergehenden Ansprüche,
**dadurch gekennzeichnet, dass** auf den der Membran-Elektroden-Einheit abgewandten Seite der Fluidverteilungsstrukturen eine anodenseitige und eine kathodenseitige Endplatte angeordnet sind.

14. Anordnung nach dem vorhergehenden Anspruch,
**dadurch gekennzeichnet, dass** die mindestens eine Sperrschicht zwischen der anodenseitigen Endplatte und der anodenseitigen Fluidverteilungsstruktur angeordnet ist.

15. Anordnung nach Anspruch 13,
**dadurch gekennzeichnet, dass** die mindestens eine Sperrschicht auf der der anodenseitigen Fluidverteilungsstruktur abgewandten Seite der anodenseitigen Endplatte angeordnet ist.

16. Verfahren zum Betreiben einer Direktoxidationsbrennstoffzelle, bei dem die Brennstoffzelle über eine Transportvorrichtung mit dem Brennstoff versorgt wird und der Volumenstrom des Brennstoffs in der Brennstoffzelle geregelt wird, so dass der Volumenstrom diskontinuierlich ist,
**dadurch gekennzeichnet,**
**dass** gasförmige Bestandteile des flüssigen Brennstoffes mittels einer Entgasungsvorrichtung entfernt werden, wobei die Entgasungsvorrichtung in Form einer Mikrostrukturierung der Fluidverteilungsstruktur ausgebildet ist, die den Abtransport von gasförmigen Medien aus der Fluidverteilungsstruktur begünstigt.

17. Verfahren nach dem vorhergehenden Anspruch,
**dadurch gekennzeichnet, dass** der Volumenstrom in der Brennstoffzelle in Intervallen erfolgt.

18. Verfahren nach dem vorhergehenden Anspruch,
**dadurch gekennzeichnet, dass** die Intervalllängen in Abhängigkeit von der Geometrie der Fluidverteilungsstruktur, dem Arbeitspunkt der Brennstoffzelle und der Verdünnung des Brennstoffs eingestellt werden.

19. Verfahren nach mindestens einem der Ansprüche 16 bis 18,
**dadurch gekennzeichnet, dass** die Transporteinrichtung bei Unterschreiten eines definierten Schwellenwertes des Stroms oder der Spannung eingeschaltet wird.

20. Verfahren nach einem der Ansprüche 16 bis 19,
**dadurch gekennzeichnet, dass** als Transportvorrichtung eine Pumpe verwendet wird.

21. Verfahren nach einem der Ansprüche 16 bis 20 unter Verwendung der Anordnung nach einem der Ansprüche 1 bis 15.

22. Verwendung der Anordnung nach einem der Ansprüche 1 bis 15 zum Betreiben einer Direktoxidationsbrennstoffzelle.

## Claims

1. Arrangement comprising at least one direct oxidation fuel cell containing a membrane electrode assembly with anode and cathode and also at least one anode-side and cathode-side fluid distribution structure with respectively at least one current collector and also at least one fuel reservoir and at least one device for transporting fuel through the fuel cell,
wherein the arrangement has in addition a control unit for adjusting the volume flow of the fuel through the fuel cell, as a result of which a discontinuous operation of the device for transporting the fuel is made possible,
**characterized in that** the fuel cell has in addition a device for removing gaseous components of the liquid fuel, wherein the degassing device is present in the form of microstructuring of the fluid distribution structure which assists the removal of gaseous media from the fluid distribution structure.

2. Arrangement according to claim 1,
**characterised in that** the control unit is a pressure container with switchable valve, in particular a bistable valve.

3. Arrangement according to one of the preceding claims,
**characterised in that** the device for transporting the fuel in the non-operating state allows transport of the fuel from the reservoir to the fuel cell.

4. Arrangement according to one of the preceding claims,
**characterised in that** the device for transporting the fuel is a pump, in particular a micropump.

5. Arrangement according to the preceding claim,
**characterised in that** the pump is a pump with diffuser elements.

6. Arrangement according to one of the preceding claims,
**characterised in that** the membrane electrode assembly consists of a proton-conducting membrane and also respectively anode-side and cathode-side catalyst layers and diffusion layers.

7. Arrangement according to one of the claims 1 to 5,
**characterised in that** the membrane electrode assembly consists of a proton-conducting membrane and also respectively anode-side and cathode-side catalyst layers and microstructures.

8. Arrangement according to the preceding claim,
**characterised in that** the proton-conducting membrane is impermeable for the fuel and the reaction products.

9. Arrangement according to one of the two preceding claims,
**characterised in that** the catalyst layers comprise platinum, ruthenium and/or alloys thereof.

10. Arrangement according to one of the preceding claims,
**characterised in that** the fluid distribution structure has at least one channel with a T-shaped cross-section.

11. Arrangement according to one of the claims 1 to 10,
**characterised in that** the fuel cell has on the anode-side at least one barrier layer which is permeable for gases and impermeable for liquids, as a result of which the liquids are retained in the fluid distribution structure and the gases are transported away from the fluid distribution structure.

12. Arrangement according to the preceding claim,
**characterised in that** the at least one barrier layer consists of an oleophobic membrane.

13. Arrangement according to one of the two preceding claims, **characterised in that** an anode-side and a cathode-side end-plate are disposed on the side of the fluid distribution structures which is orientated away from the membrane electrode assembly.

14. Arrangement according to the preceding claim,
**characterised in that** the at least one barrier layer is disposed between the anode-side end-plate and the anode-side fluid distribution structure.

15. Arrangement according to claim 14,
**characterised in that** the at least one barrier layer is disposed on the side of the anode-side end-plate which is orientated away from the anode-side fluid distribution structure.

16. Method for operating a direct oxidation fuel cell, in which the fuel cell is supplied with the fuel via a transport device, and the volume flow of the fuel in the fuel cell is controlled so that the volume flow is discontinuous,
**characterized in that**
the fuel cell has in addition a device for removing gaseous components of the liquid fuel, wherein the degassing device is present in the form of microstructuring of the fluid distribution structure which assists the removal of gaseous media from the fluid distribution structure.

17. Method according to the preceding claim,
**characterised in that** the volume flow is effected in the fuel cell at intervals.

18. Method according to the preceding claim,
**characterised in that** the interval lengths are set as a function of the geometry of the fluid distribution structure, the operating point of the fuel cell and the dilution of the fuel.

19. Method according to at least one of the claims 16 to 18,
**characterised in that** the transport device is switched on when the current or the voltage falls below a defined threshold value.

20. Method according to one of the claims 16 to 19, **characterised in that** a pump is used as transport device.

21. Method according to one of the claims 16 to 20,
using the arrangement according to one of the claims 1 to 15.

22. Use of the arrangement according to one of the claims 1 to 15 for operating a direct oxidation fuel cell.

## Revendications

1. Dispositif constitué d'au moins une pile à combustible à oxydation directe, contenant une unité membrane-électrodes avec une anode et une cathode, ainsi qu'au moins une structure distributrice de fluide côté anode et côté cathode, ayant respectivement au moins un collecteur de courant, ainsi qu'au moins un réservoir de combustible et au moins un dispositif de transport du combustible à travers la pile à combustible,
dans lequel le dispositif présente en outre une unité de régulation pour régler le courant volumique du combustible à travers la pile à combustible, ce qui permet un fonctionnement en continu du dispositif de transport du combustible, **caractérisé en ce que**
la pile à combustible présente en outre un dispositif de dégazage pour éliminer des constituants gazeux du combustible liquide, dans lequel le dispositif de dégazage se présente sous la forme d'une microstructuration de la structure distributrice de fluide, qui favorise l'évacuation de milieux gazeux de la structure distributrice de fluide.

2. Dispositif selon la revendication 1,
**caractérisé en ce que** l'unité de régulation est un réceptacle sous pression avec une soupape commutable, en particulier une soupape bistable.

3. Dispositif selon l'une quelconque des revendications précédentes,
**caractérisé en ce que** le dispositif de transport du combustible permet, à l'état de repos, un transport du combustible depuis le réservoir vers la pile à combustible.

4. Dispositif selon l'une quelconque des revendications précédentes,
**caractérisé en ce que** le dispositif de transport du combustible est une pompe, en particulier une micropompe.

5. Dispositif selon la revendication précédente, **caractérisé en ce que** la pompe est une pompe ayant des éléments diffuseurs.

6. Dispositif selon l'une quelconque des revendications précédentes,
**caractérisé en ce que** l'unité membrane-électrodes est constituée d'une membrane conductrice de protons ainsi que, respectivement, de couches de catalyseur et de couches de diffusion côté anode et côté cathode.

7. Dispositif selon l'une quelconque des revendications 1 à 5,
**caractérisé en ce que** l'unité membrane-électrodes est constituée d'une membrane conductrice de protons ainsi que, respectivement, de couches de catalyseur et de microstructures côté anode et côté cathode.

8. Dispositif selon la revendication précédente,
**caractérisé en ce que** la membrane conductrice de protons est imperméable au combustible et aux produits de réaction.

9. Dispositif selon l'une quelconque des revendications précédentes,
**caractérisé en ce que** les couches de catalyseur contiennent du platine, du ruthénium et/ou leurs alliages.

10. Dispositif selon l'une quelconque des revendications précédentes,
**caractérisé en ce que** la structure distributrice de fluide présente au moins un canal ayant une section transversale en forme de T.

11. Dispositif selon l'une quelconque des revendications précédentes,
**caractérisé en ce que** la pile à combustible présente, côté anode, au moins une couche d'arrêt perméable aux gaz et imperméable aux liquides, ce qui permet de maintenir les liquides dans la structure distributrice de fluide et d'évacuer les gaz de la structure distributrice de fluide.

12. Dispositif selon la revendication précédente,
**caractérisé en ce que** la au moins une couche d'arrêt est constituée d'une membrane oléophobe.

13. Dispositif selon l'une quelconque des revendications précédentes,
**caractérisé en ce que**, sur le côté des structures distributrices de fluide opposé à l'unité membrane-électrodes, sont agencées une plaque d'extrémité côté anode et une plaque d'extrémité côté cathode.

14. Dispositif selon la revendication précédente,
**caractérisé en ce que** la au moins une couche d'arrêt est agencée entre la plaque d'extrémité côté anode et la structure distributrice de fluide côté anode.

15. Dispositif selon la revendication 13,
**caractérisé en ce que** la au moins une couche d'arrêt est agencée sur le côté de la plaque d'extrémité côté anode opposé à la structure distributrice de fluide côté anode.

16. Procédé d'exploitation d'une pile à combustible à oxydation directe, dans lequel la pile à combustible est alimentée en combustible par un dispositif de transport et le courant volumique du combustible est réglé dans la pile à combustible de sorte que le courant volumique soit discontinu,
**caractérisé en ce que**
des constituants gazeux du combustible liquide sont éliminés au moyen d'un dispositif de dégazage, dans lequel le dispositif de dégazage se présente sous la forme d'une microstructuration de la structure distributrice de fluide, qui favorise l'évacuation de milieux gazeux de la structure distributrice de fluide.

17. Procédé selon la revendication précédente,
**caractérisé en ce que** le courant volumique dans la pile à combustible s'effectue à intervalles.

18. Procédé selon la revendication précédente,
**caractérisé en ce que** les longueurs d'intervalle sont réglées en fonction de la géométrie de la structure distributrice de fluide, du point de fonctionnement de la pile à combustible et de la dilution du combustible.

19. Procédé selon au moins l'une quelconque des revendications 16 à 18,
**caractérisé en ce que** le dispositif de transport est mis en service lorsque l'on se trouve en dessous d'une valeur de seuil définie du courant ou de la tension.

20. Procédé selon l'une quelconque des revendications 16 à 19,
**caractérisé en ce que** l'on utilise une pompe comme dispositif de transport.

21. Procédé selon l'une quelconque des revendications 16 à 20 en utilisant le dispositif selon l'une quelconque des revendications 1 à 15.

22. Utilisation du dispositif selon l'une quelconque des revendications 1 à 15 pour faire fonctionner une pile à combustible à oxydation directe.
